# EUROPÄISCHE PATENTSCHRIFT

(11) **EP 2 236 723 B1**
(45) Veröffentlichungstag und Bekanntmachung des Hinweises auf die Patenterteilung: **02.09.2015**
(21) Anmeldenummer: 10159067.7
(22) Anmeldetag: 02.04.2010
(51) Int. Cl.: E06B 3/96

(54) **Verfahren zum Verbinden von Kunststoff-Hohlkammerprofilen im Eckbereich**
Method of making a corner connection with hollow plastic profiles
Méthode pour faire une connection d'angle pour des profilés creux en matière plastique

(30) Priorität: 02.04.2009 DE 102009002159; 09.04.2009 NL 2002740
(43) Veröffentlichungstag der Anmeldung: 06.10.2010
(73) Patentinhaber: profine GmbH, 53840 Troisdorf (DE); Hanssen Beleggingen B.V., 5768 RW Meijel (NL)
(72) Erfinder: van den Berg, Friedhelm, 47608, Geldern (DE); Sprick, Henk W., 6662 JC, Elst (NL); Hanssen, Stephanus Hubertus Johannes Marie, 5768, CB Meijel (NL); Hanssen, Theodorus Thomas, 5981, HJ Panningen (NL)
(74) Vertreter: Wübken, Ludger

(56) Entgegenhaltungen:
- EP-A1- 1 605 129
- EP-A2- 1 726 768
- NL-C1- 1 029 090

## Beschreibung

Die Erfindung betrifft ein Verfahren zum Verbinden von Kunststoff-Hohlkammerprofilen, bei dem wenigstens zwei Hohlkammerprofile unterschiedlicher Querschnittskontur miteinander im Eckbereich verschweißt werden.

### Technisches Gebiet

Typische Hohlkammerprofile aus Kunststoff zur Herstellung von Fenstern und Türen weisen üblicherweise mehrere - über die Tiefe betrachtet - hintereinander liegende Hohlkammern auf, von denen eine zentrale Kammer zur Aufnahme eines Verstärkungsprofils, insbesondere eines Stahlprofils, dient. Üblicherweise werden sowohl Flügelrahmen als auch Blendrahmen im Eckbereich auf Gehrung verschweißt. Hierzu werden die Hohlkammerprofile vor dem Verschweißen im Winkel von 45° geschnitten und verschweißt, wobei sämtliche Kammern verschlossen werden.

Insbesondere in den Niederlanden werden Kunststofffenster den dort gängigen historischen Holzfenstern nachempfunden, wobei die Blendrahmenprofile einschließlich der Pfostenprofile eine besonders große Bautiefe aufweisen. Diese sogenannten Blockprofile weisen eine sehr tiefe Blendrahmen-Überschlagskammer, das ist die außenliegende Kammer, an die der Flügel beim Schließen des Flügels anschlägt, auf. Bei einem typischen "Hollandsystem" beträgt die Tiefe des Flügelrahmens z. B. 70 mm, während die Tiefe des Blendrahmens ca. 110 mm misst. Bei vielen historischen Holzfenstern kommt hinzu, dass der obere und der untere Blendrahmenholm durchgehend mit stumpf verlaufenden Enden bearbeitet werden und die seitlichen vertikalen Blendrahmenholme im Eckbereich stumpf auf diese horizontal verlaufenden Holme stoßen. Dieser sogenannte "Holzlook" wird bei Kunststoffprofil-Konstruktionen zunehmend nachgeahmt, wobei aus konstruktiven Gründen der innenliegende Teil der Profilquerschnitte auf Gehrung miteinander verbunden wird und ein außenliegender Teil stumpf als sogenannte Überblattung verläuft.

Bei historischen Holzfenstern wird häufig der untere waagerechte Blendrahmenholm mit einer schräg nach außen abfallenden Überschlagskammer versehen, während der oberer waagerechte und die beiden vertikalen Blendrahmenholme mit einer senkrecht zur Außensichtfläche verlaufenden Überschlagskammer ausgebildet sind.

### Stand der Technik

Aus der DE 20 2007 001 236 U1 ist ein Verfahren zur Herstellung von Rahmen aus Hohlkammer-Kunststoffprofile mit "Holzlook-Optik" bekannt, bei dem die Hohlkammerprofile mit Innenabschnitten in einer Kehlnaht verschweißt sind und mindestens an einer Rahmenaußenseite im Holzlook stumpf aufeinander stoßen. Hierzu werden die Hohlkammerprofile im Eckbereich über den größten Teil der Tiefe auf Gehrung geschnitten, während ein außenliegender Bereich bei einem Profil abgefräßt wird und bei dem hiermit zu verbindenden angrenzenden Profil übersteht.

Eine gleichartige, im Detail genauer beschriebene Lösung ist bereits aus der älteren EP 1 726 768 A2 sowie aus der WO 96/12863 A1 bekannt.

Aus der EP 2 146 041 A2 (nachveröffentlicht) ist ein weiteres Verfahren zur Herstellung eines Rahmens mit "Holzlook" aus Kunststoff-Hohlkammerprofilen bekannt, bei dem die Hohlkammerprofile zunächst auf Gehrung geschnitten, im Gehrungsbereich miteinander verschweißt, die Schweißraupe abgeschliffen und schließlich eine horizontal verlaufende Nut zur Simulation eines geraden Stoßbereiches gefräst wird. Dieses Verfahren ist sehr aufwendig und kann nicht in übliche hoch automatisierte Fertigungsstraßen integriert werden. Auch können mit diesem Verfahren keine lackierten, coextrudierten oder folierten Kunststoffprofile verarbeitet werden.

Bei diesen bekannten Verfahren können nur Hohlkammerprofile mit identischem Querschnitt miteinander verschweißt werden, d. h., dass z. B. ein Blendrahmenprofil mit schräg nach außen abfallender Überschlagskammer nicht mit einem Blendrahmenprofil mit einer senkrecht zur Außensichtfläche verlaufenden Überschlagskammer verschweißt werden kann.

Für Konstruktionen mit einem schräg abfallendem unteren horizontalen und mit gerade verlaufenden vertikalen Blendrahmenprofilen werden daher üblicherweise mechanische T-Verbindungen anstelle von Verschweißungen eingesetzt. Mechanische T-Verbindungen sind aufwendig in der Herstellung und anfällig in Bezug auf Undichtigkeiten.

Aus der EP 1 605 129 A1 ist bereits ein Verfahren, nach dem Oberbegriff des Anspruchs 1, bekannt geworden, bei dem mittels Verschweißung im Eckbereich Blockprofile mit schräg abfallendem unteren horizontalen und gerade verlaufenden vertikalen Blendrahmenprofilen zu einem Blendrahmen gefügt werden können. Die Blendrahmenprofile werden dazu auf der Innenseite im Winkel von 45°, auf der Außenseite mit abweichendem Winkel zugeschnitten bzw. gefräst und im Gehrungsbereich verschweißt. Die auf der Außenseite schräg verlaufende Schweißraupe muss danach absolut bündig entfernt und der gesamte Blendrahmen aufwendig poliert werden. Anschließend wird eine horizontal verlaufende Fräsung, die eine entsprechend verlaufende Profil-Stoßkante simuliert, in den Blendrahmen eingefräst. Durch die notwendige Polierung des gesamten Blendrahmens ist dieses Verfahren außerordentlich aufwendig. Auch können mit diesem Verfahren keine lackierten, coextrudierten oder folierten Kunststoffprofile verarbeitet werden.

### Aufgabe

Aufgabe der vorliegenden Erfindung ist es daher, ein Verfahren zum Verbinden von Kunststoff-Hohlkammerprofilen im Eckbereich mit wenigstens zwei Hohlkammerprofilen unterschiedlicher Querschnittskonturen zur Verfügung zu stellen, das diese Nachteile vermeidet.

### Darstellung der Erfindung

Die Erfindung löst diese Aufgabe durch ein Verfahren nach Anspruch 1, bevorzugt in Verbindung mit einem oder mehreren der Merkmale der Unteransprüche. Soweit in dieser Anmeldung der Begriff Sägen oder Sägeschnitt verwendet wird, ist damit ggf. auch ein Fräsen gemeint.

Das Verfahren beruht im Wesentlichen auf dem Grundgedanken, das erste Hohlkammerprofil - mit Ausnahme des Überblattungsbereiches - unter einem Winkel von 45° im Gehrungsbereich zu beschneiden, wobei der Überblattungsbereich sich über einen relativ schmalen Bereich - in dieser Anmeldung mit Abstand "A" bezeichnet - des Außenbereiches des ersten Hohlkammerprofils erstreckt. Das zweite Profil erhält mit zumindest drei Schnitten bzw. Fräsungen im Gehrungsbereich die zum Verschweißen benötigte Kontur. Durch das anschließende Verschweißen beider Hohlkammerprofile im Gehrungsbereich, bei dem der Überblattungsbereich von der Verschweißung ausgenommen wird, wird das Profil über einen Großteil seiner Tiefe verschweißt, wodurch sich eine hohe Eckfestigkeit ergibt, während der nach außen sichtbare Überblattungsbereich die gewünschte Optik im "Holzlook" ermöglicht.

Bevorzugt weisen das erste Hohlkammerprofil und das zweite Hohlkammerprofil je eine an die Außensichtfläche angrenzende Anschlagkammer auf. Der Abstand "A" von der Außensichtfläche kann bevorzugt entweder der Stärke der Außenwand der zwei Hohlkammerprofile entsprechen, oder er verläuft innerhalb der an die Außensichtfläche angrenzenden Anschlagkammern.

Bevorzugt weisen das erste Hohlkammerprofil und das zweite Hohlkammerprofil je eine zentrale Kammer zur Aufnahme eines Verstärkungsprofils auf. Die Verschweißung der Profile im Gehrungsbereich umfasst dann zumindest einen Bereich mit diesen zentralen Kammern, so dass diese beim Verschweißen im Gehrungsbereich vollständig geschlossen werden.

Für die Verschweißung wird ein bevorzugt ein ebener Schweißspiegel verwendet, der den Bereich der Überblattung sowie den Bereich zwischen den Überschlags-Sichtflächen und der Linie "B" ausspart. Beim Zuschneiden der beiden Profile muss - wie dem Fachmann geläufig - ein entsprechender Schweißabbrand von z. B. 3 mm berücksichtigt werden. Bei Bedarf kann die Überblattung mit der Überblattungs-Ausklinkung verklebt werden.

Das erfindungsgemäße Verfahren kann auch mit bereits lackierten, folierten oder z. B. farbig coextrudierten Kunststoffprofilen angewendet werden. Besonders bevorzugt werden mit PMMA coextrudierte PVC-Profile eingesetzt.

Zusätzlich zur Verschweißung kann ergänzend eine Verschraubung der Profile im Eckbereich erfolgen. Dazu weist bevorzugt wenigstens eines der Hohlkammerprofile einen Schraubkanal auf.

### Kurze Beschreibung der Zeichnung

Die Erfindung wird nachfolgend anhand eines Ausführungsbeispiels sowie der Zeichnung näher erläutert. Es zeigen dabei:
- Fig. 1: eine Ansicht des zweiten Hohlkammerprofils von der Innenseite;
- Fig. 2: eine Ansicht des Gehrungsbereichs des zweiten Hohlkammerprofils;
- Fig. 3: eine Ansicht des zweiten Hohlkammerprofils von der Falzseite mit Überblattungs-Ausklinkung;
- Fig. 4: eine Ansicht des zweiten Hohlkammerprofils von der Außenseite mit Überblattungs-Ausklinkung;
- Fig. 5: eine Ansicht des ersten Hohlkammerprofils von der Innenseite mit Überblattung;
- Fig. 6: Schnitt AA gemäß Fig. 5;
- Fig. 7: eine Ansicht des ersten Hohlkammerprofils von der Falzseite;
- Fig. 8: eine Ansicht des Gehrungsbereichs des ersten Hohlkammerprofils;
- Fig. 9: eine räumliche Ansicht des ersten Hohlkammerprofils mit Überblattung;
- Fig. 10: eine räumliche Ansicht des zweiten Hohlkammerprofils mit Überblattungs-Ausklinkung;
- Fig. 11: eine räumliche Ansicht einer fertig verschweißten Ecke vom Falzbereich/außen gesehen;
- Fig. 12: die Ecke gemäß Fig. 11 von der Innenseite/Maueranschlussbereich gesehen;
- Fig. 13: eine Außenansicht eines fertigen Blendrahmens ohne Flügelrahmen und
- Fig. 14: eine Außenansicht eines fertigen Blendrahmens mit Flügelrahmen.

### Bester Weg zur Ausführung der Erfindung

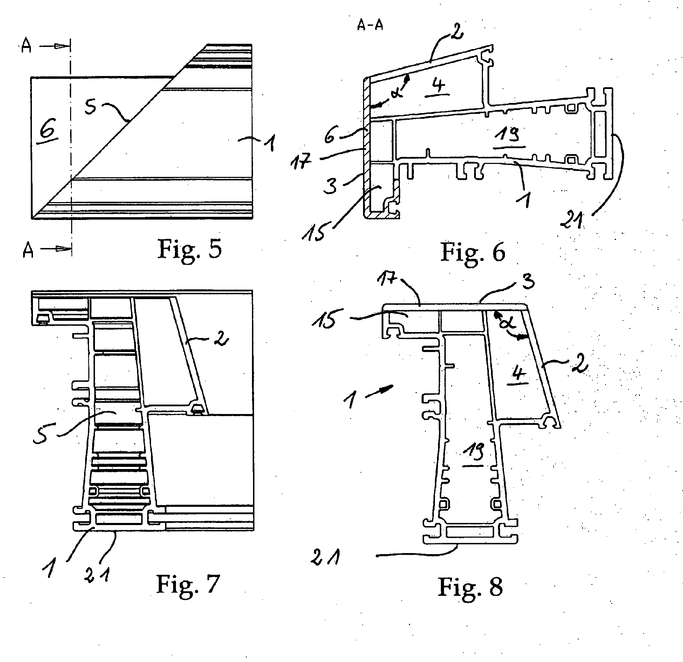

In den Fig. 5 bis 9 ist das erste Blendrahmenprofil 1 mit schräger Überschlags-Sichtfläche 2 mit dem Gehrungsbereich 5 in verschiedenen Ansichten dargestellt. Die Überblattung 6, in Fig. 5 von der Innenseite des Blendrahmenprofils 1 dargestellt, weist gemäß diesem Ausführungsbeispiel eine Stärke "A" auf, die exakt der Wandstärke der Außenwandung 17 entspricht. Die Überschlagskammer 4 verläuft - wie insbesondere im Schnitt der Fig. 8 zu erkennen - im Winkel α von 105° zur Außensichtfläche 3 des ersten Blendrahmenprofils 1, so dass die Überschlags-Sichtfläche 2 im Winkel von 15° zur Außenseite hin geneigt ist.

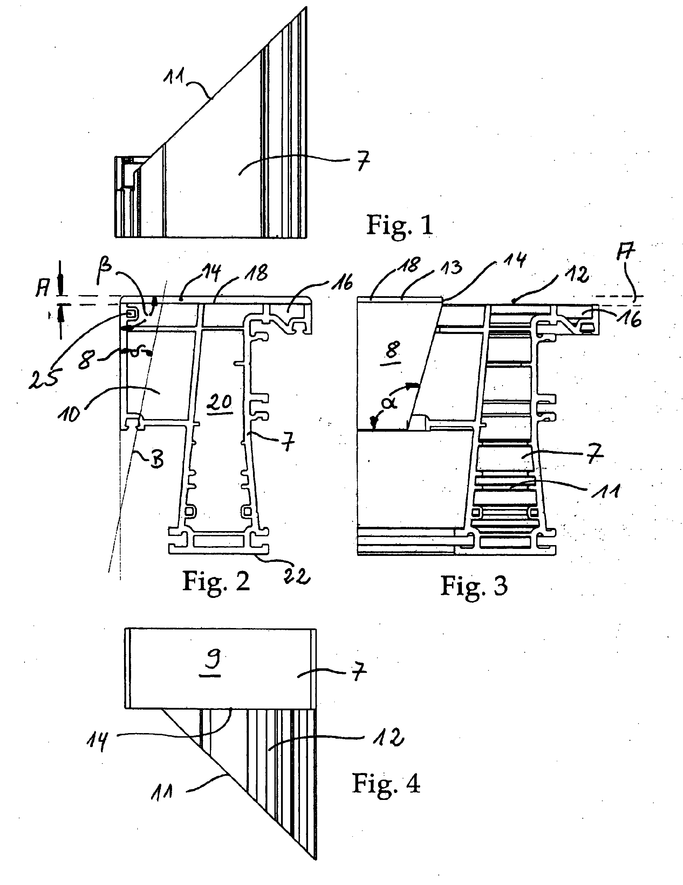

Das in den Fig. 5 bis 9 dargestellte erste Blendrahmenprofil 1 wird ausschließlich für den unteren horizontalen Blendrahmenholm verwendet, während die beiden vertikalen und der obere horizontale Blendrahmenholm aus dem zweiten Blendrahmenprofil 7 gefertigt werden, das in den Fig. 1 bis 4 und 10 dargestellt ist. Wie insbesondere im Schnitt gemäß Fig. 2 zu erkennen ist, verläuft die Überschlags-Sichtfläche 8 des zweiten Blendrahmenprofils 7 senkrecht zur Außensichtfläche 9. Nach einer Alternative zu dem in den Fig. dargestellten Ausführungsbeispiel kann die Überschlags-Sichtfläche 8 auch leicht abgeschrägt verlaufen, beispielsweise unter einem Winkel β = 93°. In diesem Falle würde die Überschlags-Sichtfläche 8 im Winkel von 3° leicht nach außen abfallen.

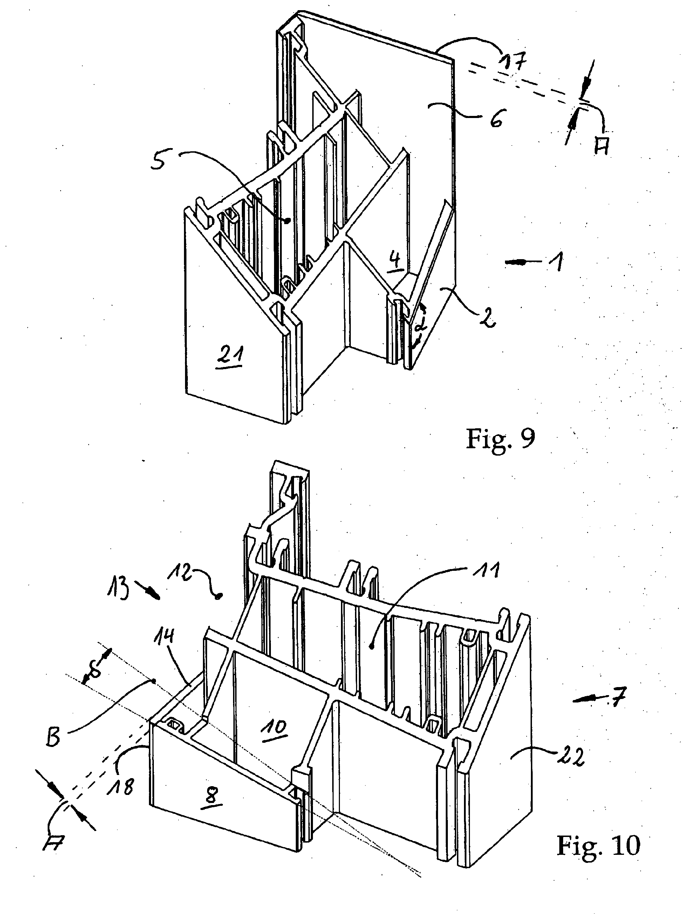

Wie in Fig. 9 zu erkennen, ist der Zuschnitt des ersten Blendrahmenprofils 1 mit der schrägen Überschlags-Sichtfläche 2 relativ einfach: das erste Blendrahmenprofil 1 wird hierzu unter Bildung eines Gehrungsbereiches 5 mit einem senkrecht zur Außensichtfläche 3 und unter 45° zur Längserstreckung gesägt, wobei der Sägeschnitt exakt bis an die Außenwand 17 geführt wird. Mit einem zweiten Sägeschnitt wird anschließend in einem Abstand "A", der wiederum mit 3 mm der Wandstärke der Außenwand 17 entspricht, parallel zur Außenwand 17 im Winkel von 45° zur Längserstreckung des ersten Blendrahmenprofils 1 der im ersten Schnitt festgelegte Gehrungsbereich 5 herausgesägt. Das so hergestellte Profilstück weist mit Ausnahme der Überblattung 6, die durch die verbliebene Außenwand 17 gebildet wird, einen ebenen, geraden Gehrungsbereich 5 auf, der im Winkel von 45° zur Längserstreckung des Blendrahmenprofils 1 verläuft.

Der Zuschnitt des zweiten Blendrahmenprofils 7 mit senkrechter Überschlags-Sichtfläche 8 erfordert hingegen zumindest drei Arbeitsgänge: zum einen wird das zweite Blendrahmenprofil 7 unter Bildung eines Gehrungsbereichs 11 mit einer senkrecht zur Außensichtfläche und unter 45° zur Längserstreckung verlaufenden, bis zu einer im Winkel δ und im Abstand zur Überschlags-Sichtfläche 8 der Überschlagskammer 10 verlaufenden Linie "B" (Fig. 2 und Fig. 10) eingeschnitten. Hierzu wird das zweite Blendrahmenprofil 7 zweckmäßig im Winkel δ gegenüber der Bewegungsachse des Sägeblattes einer handelsüblichen Säge eingespannt. Der Winkel δ beträgt im dargestellten Ausführungsbeispiel 11°. Der Abstand zur Sichtfläche 8 der Überschlagskammer 10 der Linie "B" beträgt an der zur Innensichtfläche 22 des Blendrahmenprofils 7 gerichteten Seite der Überschlagskammer 10 ca. 5 mm, während der Abstand zur Sichtfläche 8 der Überschlagskammer an der Außensichtfläche 9 ca. 15 mm beträgt.

Mit einem zweiten Schnitt bzw. bevorzugt einer entsprechenden Fräsung wird die Außenseite 13 des zweiten Hohlkammerprofils 7 zur Bildung der Überblattungs-Ausklinkung 12 mit senkrecht zur Längserstreckung verlaufender Kante 14 bis etwa zum Abstand "A" = 3 mm von der Außensichtfläche 9 entfernt.

In einem dritten Arbeitsgang wird durch einen im Winkel α = 105° zur Außensichtfläche 9 bis zur Linie "B" verlaufenden Schnitt oder eine entsprechende Fräsung das zweiten Hohlkammerprofil 7 im Bereich der Überschlagskammer 10 ausgeklinkt.

Anschließend wird das erste Hohlkammerprofil 1 mit dem zweiten Hohlkammerprofil 7 im Gehrungsbereich 5, 11 verschweißt, wobei die Überblattung 6 des ersten Hohlkammerprofils 1 die Überblattungs-Ausklinkung 12 des zweiten Hohlkammerprofils 7 überdeckt.

Für die Verschweißung wird ein ebener Schweißspiegel verwendet, der den Bereich der Überblattung 6 sowie den Bereich zwischen den Überschlags-Sichtflächen 2 bzw. 8 und der Linie "B" ausspart. Beim Zuschneiden der beiden Profile 1, 7 muss - wie dem Fachmann geläufig - ein entsprechender Schweißabbrand ca. 3 mm berücksichtigt werden. Bei Bedarf kann die Überblattung 6 mit der Überblattungs-Ausklinkung 12 verklebt werden.

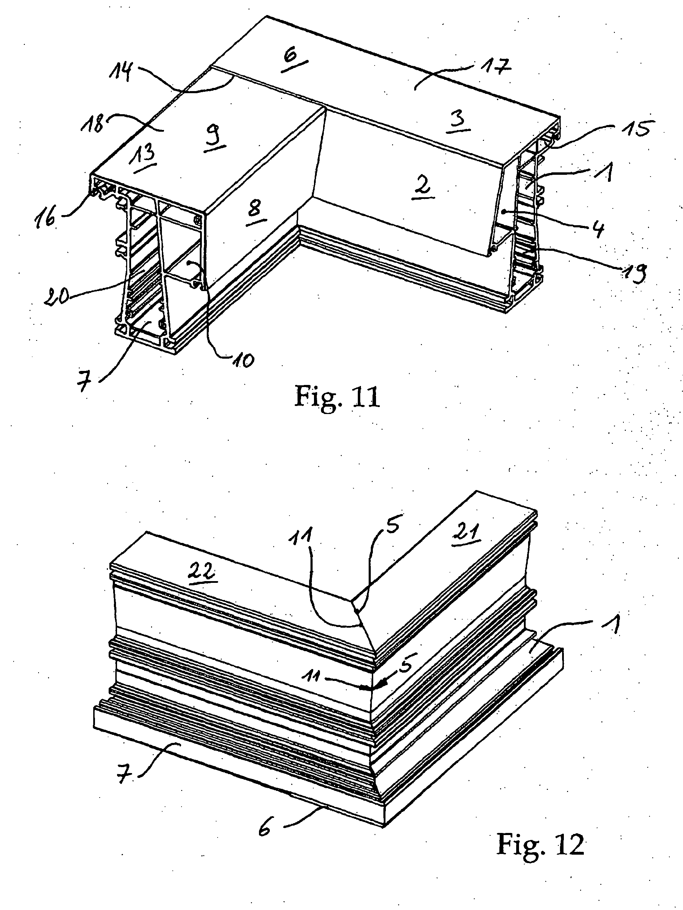

In den Fig. 11 und 12 ist die fertig verschweißte Ecke eines Blendrahmens in zwei räumlichen Ansichten dargestellt. Wie insbesondere in Fig. 12 zu erkennen, umfasst die Überblattung 6 des ersten Blendrahmenprofils 1 von der Tiefe her gesehen lediglich die Außenwand 17 des ersten Blendrahmenprofils 1. Alternativ hierzu kann die Überblattung auch eine größere Tiefe von z. B. 6 mm betragen, so dass die Anschlagkammer 15 des ersten Blendrahmenprofils 1 teilweise geöffnet bleibt. Bei Bedarf kann diese Öffnung durch eine Abschlusskappe geschlossen werden.

Wie insbesondere in Fig. 11 zu erkennen ist, stößt - wie bei historischen Holzfenstern üblich - der vertikal verlaufende Blendrahmenholm - durch das zweite Blendrahmenprofil 7 gebildet - von der Außenansicht gesehen stumpf auf den durchgehenden vom ersten Blendrahmenprofil 1 gebildeten Blendrahmenholm, wobei dieser Blendrahmenholm eine schräg nach außen abfallende Überschlags-Sichtfläche 2 aufweist, auf die wiederum die Überschlags-Sichtfläche 8 des zweiten Blendrahmenprofils 7 stumpf aufsetzt.

Von der Innenseite des Blendrahmens her gesehen stoßen die Blendrahmenprofile 1 und 7 im Gehrungsbereich 5, 11 jedoch im Winkel von 45° aufeinander, wie es für nachgebildete Holzfenster aus Kunststoff-Hohlkammerprofilen üblich ist.

Das erste Hohlkammerprofil 1 und das zweite Hohlkammerprofil 7 weise je eine zentrale Kammer 19, 20 zur Aufnahme eines Verstärkungsprofils auf, die beim Verschweißen im Gehrungsbereich 5, 11 vollständig geschlossen werden.

Wie in Fig. 2 zu erkennen, weist das Blendrahmenprofil 7 im Eckbereich zwischen der Außenwand 18 und der Überschlags-Sichtfläche 8 einen Schraubkanal 25 auf. Dieser dient zur zusätzlichen Verschraubung der Blendrahmenprofile im Eckbereich. Mit dieser zusätzlichen Verschraubung wird insbesondere die Torsionssteifigkeit im Eckbereich weiter erhöht.

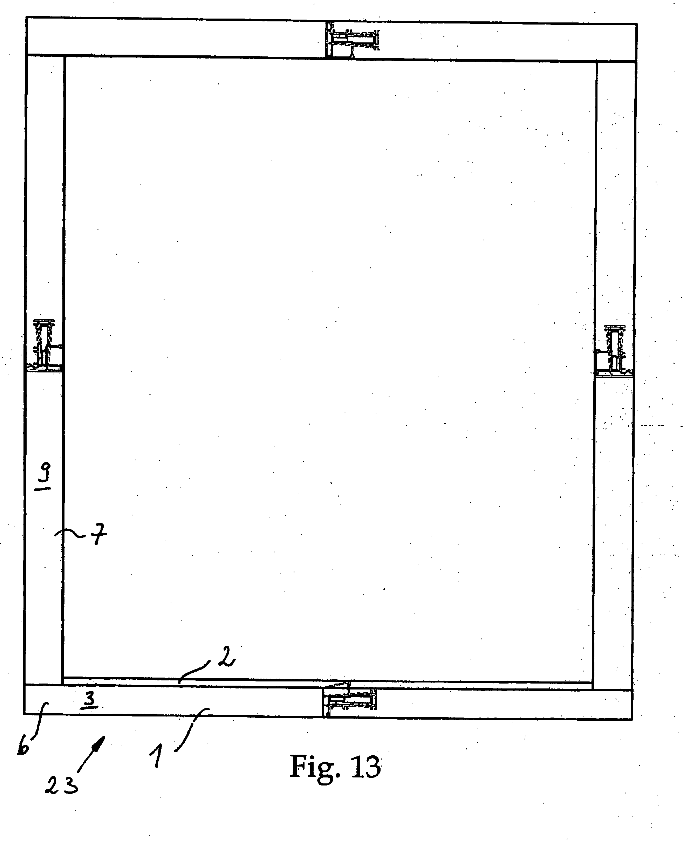

In Fig. 13 ist ein fertig verschweißter Blendrahmen 23 dargestellt. Der obere horizontale Blendrahmenholm und die beiden seitlichen Blendrahmenholme sind aus dem Blendrahmenprofil 7 mit senkrechter Überschlags-Sichtfläche 8 gebildet, während der untere horizontal verlaufende Blendrahmenholm aus dem ersten Blendrahmenprofil 1 mit schräger Überschlags-Sichtfläche 2 gefertigt wurde. Die beiden unteren Ecken sind nach dem erfindungsgemäßen Verfahren hergestellt worden, während die beiden oberen Ecken in an sich bekannter Weise gemäß dem dem Fachmann beispielsweise aus der WO 96/12863 bekannten Verfahren mit außenliegender Überblattung hergestellt wurden.

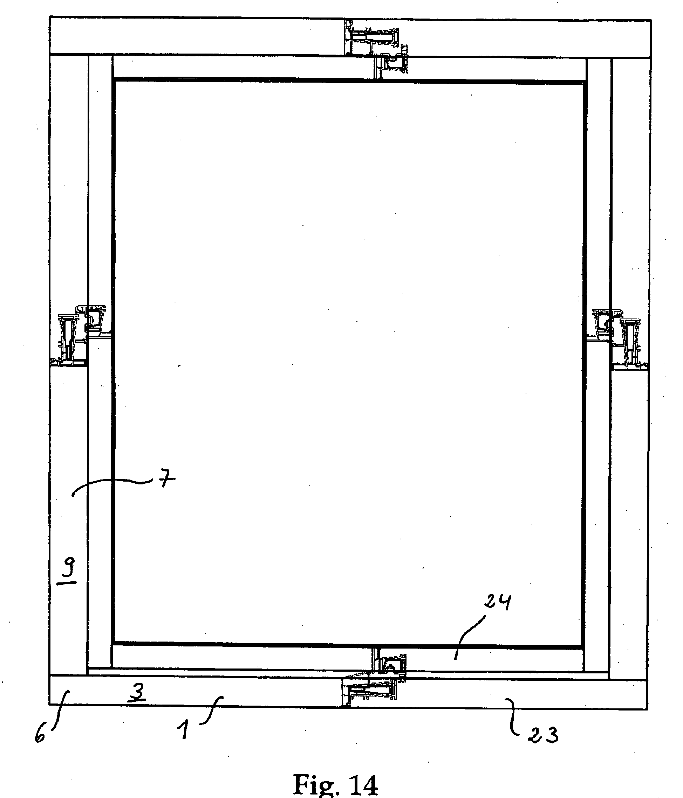

In Fig. 14 ist schließlich ein fertiges Fenster mit Blendrahmen 23 und Flügelrahmen 24 dargestellt. Man erkennt in Fig. 14, dass bei dem Flügelrahmen die beiden seitlichen Flügelrahmenholme mit einer durchgehenden Überblattung versehen sind, so dass der Eindruck entsteht, die beiden seitlichen Profile würden die beiden horizontal verlaufenden Holme stumpf überragen. Beim Blendrahmen 23 scheinen hingegen die beiden senkrecht verlaufenden Blendrahmenholme stumpf an den horizontal verlaufenden Blendrahmenholmen zu enden. Dieses entspricht dem typischen "Holzlook"-Optik holländischer Kunststofffenster.

### Legende

- 1: erstes Blendrahmenprofil (mit schräger Überschlags-Sichtfläche)
- 2: Überschlags-Sichtfläche (erstes Blendrahmenprofil)
- 3: Außensichtfläche (erstes Blendrahmenprofil)
- 4: Überschlagskammer (erstes Blendrahmenprofil)
- 5: Gehrungsbereich(erstes Blendrahmenprofil)
- 6: Überblattung
- 7: zweites Blendrahmenprofil (mit senkrechter Überschlags-Sichtfläche)
- 8: Überschlags-Sichtfläche (zweites Blendrahmenprofil)
- 9: Außensichtfläche (zweites Blendrahmenprofil)
- 10: Überschlagskammer (zweites Blendrahmenprofil)
- 11: Gehrungsbereich(zweites Blendrahmenprofil)
- 12: Überblattungs-Ausklinkung
- 13: Außenseite (zweites Blendrahmenprofil)
- 14: Kante
- 15: Anschlagkammer(erstes Blendrahmenprofil)
- 16: Anschlagkammer(zweites Blendrahmenprofil)
- 17: Außenwand (erstes Blendrahmenprofil)
- 18: Außenwand (zweites Blendrahmenprofil)
- 19: zentrale Kammer (erstes Blendrahmenprofil)
- 20: zentrale Kammer (zweites Blendrahmenprofil)
- 21: Innensichtfläche (erstes Blendrahmenprofil)
- 22: Innensichtfläche (zweites Blendrahmenprofil)
- 23: Blendrahmen
- 24: Flügelrahmen
- 25: Schraubkanal
- A: Stärke der Überblattung
- B: Linie
- α: Winkel
- β: Winkel
- δ: Winkel

## Patentansprüche

1. Verfahren zum Verbinden von Kunststoff-Hohlkammerprofilen (1, 7) im Eckbereich, bei dem wenigstens zwei Hohlkammerprofile (1, 7) unterschiedlicher Querschnittskontur miteinander im Eckbereich verschweißt werden, wobei
- wenigstens ein erstes Hohlkammerprofil (1) eine in einem ersten Winkel α zur Außensichtfläche (3) schräg nach außen abfallende Überschlagskammer (4) und
- wenigstens ein zweites Hohlkammerprofil (7) eine
- senkrecht zur Außensichtfläche (9) verlaufende oder
- in einem zweiten, vom ersten Winkel α abweichenden Winkel β zur Außensichtfläche (9) schräg nach außen abfallende Überschlagskammer (10) aufweist,
**gekennzeichnet, durch** folgende Verfahrensschritte:
a) das erste Hohlkammerprofil (1) wird unter Bildung eines Gehrungsbereichs (5) mit einem senkrecht zur Außensichtfläche (3) und unter 45° zur Längserstreckung verlaufenden, sich bis zu einem Abstand "A" zur Außensichtfläche über einen Großteil der Tiefe des ersten Höhlkammerprofils (1) erstreckenden Sägeschnitt oder eine entsprechende Fräsung und einem zweiten, parallel und etwa im Abstand "A" zur Außensichtfläche (3) verlaufenden zweiten Sägeschnitt oder eine entsprechende Fräsung unter Bildung einer Überblattung (6) mit der Stärke "A" beschnitten oder befräst;
b) das zweite Hohlkammerprofil (7) wird unter Bildung eines Gehrungsbereichs (11) senkrecht zur Außensichtfläche (9) und unter 45° zur Längserstreckung bis zu einer im Winkel δ und im Abstand zur Sichtfläche (8) der Überschlagskammer (10) verlaufenden Linie "B" eingeschnitten oder eingefräst;
c) die Außenseite (13) des zweiten Hohlkammerprofils (7) wird zur Bildung einer Überblattungs-Ausklinkung (12) mit senkrecht zur Längserstreckung verlaufender Kante (14) bis etwa zum Abstand "A" von der Außensichtfläche (9) **durch** Sägen oder Fräsen entfernt;
d) **durch** einen im Winkel α zur Außensichtfläche (9) bis zur Linie "B" verlaufenden Schnitt oder eine entsprechende Fräsung wird das zweiten Hohlkammerprofil (7) im Bereich der Überschlagskammer (10) ausgeklinkt,
wobei die Verfahrenschritte a) bis d) auch in abweichender Reihenfolge durchgeführt werden können;
e) das erste Hohlkammerprofil (1) wird mit dem zweiten Hohlkammerprofil (7) im Gehrungsbereich (5, 11) verschweißt, wobei die Überblattung (6) des ersten Hohlkammerprofils (1) die Überblattungs-Ausklinkung (12) des zweiten Hohlkammerprofils (7) überdeckt.

2. Verfahren zum Verbinden von Kunststoff-Hohlkammerprofilen (1, 7) nach Anspruch 1, **dadurch gekennzeichnet, dass** das erste Hohlkammerprofil (1) und das zweite Hohlkammerprofil (7) je eine an die Außensichtfläche (3, 9) angrenzende Anschlagkammer (15, 16) aufweisen, und dass der Abstand "A" von der Außensichtfläche (2, 9) ≥ der Stärke der Außenwand (17, 18) der zwei Hohlkammerprofile (1, 7) und kleiner als die Tiefe der an die Außensichtfläche angrenzenden Anschlagkammer (15, 16) ist.

3. Verfahren zum Verbinden von Kunststoff-Hohlkammerprofilen nach Anspruch 1, **dadurch gekennzeichnet, dass** das erste Hohlkammerprofil (1) und das zweite Hohlkammerprofil (7) eine zentrale Kammer (19, 20) zur Aufnahme eines Verstärkungsprofils aufweist, die beim Verschweißen im Gehrungsbereich (5, 11) vollständig geschlossen wird.

4. Verwendung eines Verfahrens nach einem der Ansprüche 1 bis 3 zum Verbinden von lackierten, folierten öder mit PMMA coextrudierten Kunststoff-Hohlkammerprofilen (1, 7).

5. Verwendung eines Verfahrens nach einem der Ansprüche 1 bis 3 zur Herstellung eines Blendrahmens (23)
- mit einem unteren horizontalen Blendrahmenholm, der von einem Hohlkammerprofil (1) gebildet wird, das eine im Winkel α zur Außensichtfläche (3) schräg nach außen abfallende Überschlagskammer (4) aufweist,
- sowie zwei senkrechten und einem oberen horizontal verlaufenden Blendrahmenholmen, die von einem zweiten Hohlkammerprofil (7) gebildet werden, das eine senkrecht zur Außensichtfläche (9) verlaufende Überschlagskammer (10) aufweist.

## Claims

1. Method for connecting plastic hollow-chamber profiles (1, 7) in the corner region, in which at least two hollow-chamber profiles (1, 7) of different cross-sectional contours are welded to one another in the corner region, wherein
- at least one first hollow-chamber profile (1) has an overlap chamber (4) which slopes down obliquely in the outward direction at a first angle α in relation to the outer visible surface (3), and
- at least one second hollow-chamber profile (7) has an overlap chamber (10) which
- runs perpendicularly to the outer visible surface (9) or
- slopes down obliquely in the outward direction at a second angle β in relation to the outer visible surface (9), said second angle differing from the first angle α,
**characterized by** the following method steps:
a) to form a mitre region (5), the first hollow-chamber profile (1) is trimmed or milled using a saw cut or a corresponding milling cut which runs perpendicularly to the outer visible surface (3) and at 45° in relation to the longitudinal extent, and extends up to a distance "A" from the outer visible surface over a large part of the depth of the first hollow-chamber profile (1), and to form a lap joint (6) of thickness "A" a second saw cut or using a corresponding milling cut is performed which cut runs parallel to, and approximately at a distance "A" from, the outer visible surface (3);
b) to form a mitre region (11), the second hollow-chamber profile (7) is cut or milled perpendicularly to the outer visible surface (9) and at 45° in relation to the longitudinal extent and up to a line "B", said line "B" running at an angle δ in relation to, and at a distance from, the visible surface (8) of the overlap chamber (10),
c) the outer side (13) of the second hollow-chamber profile (7) is removed by sawing or milling to form an overlap-joint recess (12) with an edge (14) up to approximately the distance "A" from the outer visible surface (9), said edge running perpendicularly to the longitudinal extent;
d) the second hollow-chamber profile (7) is recessed in the region of the overlap chamber (10) by a saw cut or by a corresponding milling cut which runs at an angle α in relation to the outer visible surface (9) up to the line "B",
wherein the method steps a) to d) can also be carried out in a different sequence;
e) the first hollow-chamber profile (1) is welded to the second hollow-chamber profile (7) in the mitre region (5, 11), wherein the lap joint (6) of the first hollow-chamber profile (1) covers over the overlap-joint recess (12) of the second hollow-chamber profile (7).

2. Method for connecting plastic hollow-chamber profiles (1, 7) according to Claim 1, **characterized in that** the first hollow-chamber profile (1) and the second hollow-chamber profile (7) each have a stop chamber (15, 16) adjacent to the outer visible surface (3, 9), and **in that** the distance "A" from the outer visible surface (2, 9) is ≥ the thickness of the outer wall (17, 18) of the two hollow-chamber profiles (1, 7) and smaller than the depth of the stop chamber (15, 16), which is adjacent to the outer visible surface.

3. Method for connecting plastic hollow-chamber profiles according to Claim 1, **characterized in that** the first hollow-chamber profile (1) and the second hollow-chamber profile (7) have a central chamber (19, 20) for accommodating a reinforcing profile, said central chamber (19, 20) is closed completely during welding in the mitre region (5, 11).

4. Use of a method according to one of Claims 1 to 3 for connecting plastic hollow-chamber profiles (1, 7) which are varnished, coated or coextruded with PMMA.

5. Use of a method according to one of Claims 1 to 3 for producing an exterior frame (23)
- having a lower horizontal exterior-frame member which is formed by a hollow-chamber profile (1) which has an overlap chamber (4) which slopes down obliquely in the outward direction at an angle α in relation to the outer visible surface (3),
- and having two vertical exterior-frame members and an upper horizontally running exterior-frame member, these being formed by a second hollow-chamber profile (7) which has an overlap chamber (10) which runs perpendicularly to the outer visible surface (9).

## Revendications

1. Procédé pour assembler des profilés creux en matière plastique (1, 7) dans la région d'angle, dans lequel on soude l'un à l'autre dans la région d'angle au moins deux profilés creux (1, 7) ayant un contour de section transversale différent, dans lequel
- au moins un premier profilé creux (1) présente une chambre surplombante (4) diminuant en oblique vers l'extérieur avec un premier angle α par rapport à la face visible extérieure (3) et
- au moins un deuxième profilé creux (7) présente une chambre surplombante (10)
- s'étendant perpendiculairement à la face visible extérieure (9) ou
- diminuant en oblique vers l'extérieur avec un deuxième angle β, différent du premier angle α, par rapport à la face visible extérieure (9),
**caractérisé par** les étapes suivantes:
a) le premier profilé creux (1) est coupé ou fraisé, avec formation d'une région d'onglet (5), avec un trait de scie orienté perpendiculairement à la face visible extérieure (3) et sous 45° par rapport à l'extension longitudinale, s'étendant jusqu'à une distance "A" de la face visible extérieure sur une grande partie de la profondeur du premier profilé creux (1) ou un fraisage correspondant et avec un deuxième trait de scie orienté parallèlement et environ à la distance "A" de la face visible extérieure (3) ou un fraisage correspondant avec formation d'un tenon d'assemblage à mi-bois (6) d'épaisseur "A";
b) le deuxième profilé creux (7) est entaillé ou fraisé, avec formation d'une région d'onglet (11), perpendiculairement à la face visible extérieure (9) et sous 45° par rapport à l'extension longitudinale, jusqu'à une ligne "B" s'étendant sous l'angle δ et à distance de la face visible (8) de la chambre surplombante (10);
c) le côté extérieur (13) du deuxième profilé creux (7) est enlevé par sciage ou fraisage avec une arête (14) s'étendant perpendiculairement à l'extension longitudinale environ jusqu'à la distance "A" de la face visible extérieure (9) pour former une entaille à mi-bois (12);
d) le deuxième profilé creux (7) est entaillé dans la région de la chambre surplombante (10) par une coupe s'étendant sous l'angle α par rapport à la face visible extérieure (9) jusqu'à la ligne "B",
dans lequel les étapes a) à d) peuvent aussi être exécutées dans un ordre différent;
e) le premier profilé creux (1) est soudé avec le deuxième profilé creux (7) dans la région d'onglet (5, 11), dans lequel le tenon à mi-bois (6) du premier profilé creux (1) recouvre l'entaille à mi-bois (12) du deuxième profilé creux (7).

2. Procédé pour assembler des profilés creux en matière plastique (1, 7) selon la revendication 1, **caractérisé en ce que** le premier profilé creux (1) et le deuxième profilé creux (7) présentent chacun une chambre de butée (15, 16) adjacente à la face visible extérieure (3, 9), et **en ce que** la distance "A" de la face visible extérieure (2) est ≥ à l'épaisseur de la paroi extérieure (17, 18) des deux profilés creux (1, 7) et est plus petite que la profondeur de la chambre de butée (15, 16) adjacente à la face visible extérieure.

3. Procédé pour assembler des profilés creux en matière plastique selon la revendication 1, **caractérisé en ce que** le premier profilé creux (1) et le deuxième profilé creux (7) présentent une chambre centrale (19, 20) destinée à recevoir un profilé de renforcement, qui est entièrement fermée lors du soudage dans la région d'onglet (5, 11).

4. Utilisation d'un procédé selon l'une quelconque des revendications 1 à 3 pour assembler des profilés creux en matière plastique (1, 7) laqués, étamés ou co-extrudés avec PMMA.

5. Utilisation d'un procédé selon l'une quelconque des revendications 1 à 3 pour la fabrication d'un châssis dormant (23)
- avec une première traverse dormante horizontale inférieure, qui est formée par un profilé creux (1), qui présente une chambre surplombante (4) diminuant en oblique vers l'extérieur sous un angle α par rapport à la face visible extérieure (3),
- ainsi qu'avec deux montants dormants verticaux et une traverse dormante horizontale supérieure, qui sont formés par un deuxième profilé creux (7), qui présente une chambre surplombante (10) s'étendant perpendiculairement à la face visible extérieure (9).
